# EUROPÄISCHE PATENTANMELDUNG

(11) **EP 2 500 591 A1**
(43) Veröffentlichungstag der Anmeldung: **19.09.2012**
(21) Anmeldenummer: 12159400.6
(22) Anmeldetag: 14.03.2012
(51) Int. Cl.: F16C 33/60, F16C 33/62

(54) **Lagerring eines Wälzlagers**

(30) Priorität: 14.03.2011 DE 102011005500
(71) Anmelder: Aktiebolaget SKF, 41 550 Göteborg (SE)
(72) Erfinder: Meyer, Wilhelm, 97453 Schonungen (DE); Wohlfeil, Florian, 97464 Niederwerrn (DE)
(74) Vertreter: Schonecke, Mitja

(57) **Zusammenfassung**

Die Erfindung betrifft einen Lagerring (1) eines Wälzlagers, der eine ringförmige Struktur mit einer Laufbahn (2) aufweist. Um einen kostengünstigen und leichten Lagerring zur Verfügung zu stellen, sieht die Erfindung vor, dass der Lagerring (1) aus einem Grundkörper (3, 3') besteht, auf dem ein die Laufbahn (2) aufweisender Trägerring (4) angeordnet ist, wobei der Trägerring (4) aus einem ausgehärteten Harz besteht und wobei der Trägerring (4) zum direkten Anlauf der Wälzkörper des Wälzlagers auf der Laufbahn (2) des Trägerrings (4) ausgebildet ist.

## Beschreibung

Die Erfindung betrifft einen Lagerring eines Wälzlagers, der eine ringförmige Struktur mit einer Laufbahn aufweist.

Ein Lagerring dieser Art ist beispielsweise aus der DE 10 2006 008 438 A1 bekannt. Um das Lager preisgünstig zu realisieren, ist bei dieser vorbekannten Lösung vorgesehen, dass ein dünner Ring aus hartem Material auf einen Lagerring-Grundkörper aufgeklebt ist. Der Lagerring muss daher nicht vollständig aus Kugellagerstahl, zumeist des Stahltyps 100 Cr 6, bestehen. Nur der Ring aus hartem Material bildet die Laufbahn des Lagerrings und muss aus hartem und entsprechend teurem Material bestehen.

In vielen Anwendungsbereichen ist es absolut ausreichend, eine Lösung vorzusehen, bei der der Lagerring zwar eine gewisse Haltbarkeit bezüglich seiner Laufbahn haben muss, die allerdings ansonsten keine besonders hohen Forderungen an die Genauigkeit und Stabilität des Lagerrings stellt. Bei solchen Anwendungen stehen vielmehr die Kosten für die Herstellung der Lagerung im Vordergrund.

Weiterhin ergeben sich immer weiter steigende Anforderungen an einen gattungsgemäßen Lagerring. Die Umweltbedingungen für Wälzlager und Gleitlager werden immer schärfer. Es werden erhöhte Forderungen an das Gewicht, die Form oder auch die chemische Beständigkeit von Lagern gestellt. Weiterhin müssen die Lager immer häufiger auch periphere Funktionen neben der eigentlichen Lagerung übernehmen. Diese Funktionen können die Isolation, die Wärmedämmung oder auch die Schwingungsdämpfung sein.

Bisher wurden bei entsprechenden Anwendungen meist Dünnringlager der verschiedenen Bauarten, Drahtlager und Blechlager verwendet.

In Serienanwendungen werden fast ausschließlich klassische Materialien wie Stahl und Leichtmetalllegierungen - auch mit Oberflächenveredelung - eingesetzt. Oftmals können dabei allerdings applikationsbedingt erforderliche Eigenschaften wie Dämpfung, filigrane Befestigungsflansche oder nichtmagnetische Eigenschaften, falls überhaupt, nur aufwendig und teuer erfüllt werden.

Die DE 10 2010 013 630 A1offenbart einen Wälzlagerring aus einem Harz, der eine metallische Laufbahn trägt.

Gleitlagerlösungen offenbaren die DE 26 48 118A1**,** die DD141 435A1, die AT 503 986 B1**,** die DD 97 038 A1 und die DE 42 17 319 A. Lagerringe aus Kunststoff sind aus der DE 1 174 970 A bekannt.

Der Erfindung liegt daher die **Aufgabe** zugrunde, einen Lagerring der eingangs genannten Art bereitzustellen, der zwar eine hinreichende Haltbarkeit und Verschleißresistenz aufweist, der sich aber auch in besonders vorteilhafter Weise wirtschaftlich herstellen lässt. Die Wirtschaftlichkeit soll sich insbesondere auf den zum Einsatz kommenden Materialbedarf für den Lagerring beziehen. Eine weitere Zielsetzung ist das Bereitstellen eines Lagerrings, das sich durch ein geringes Gewicht auszeichnet.

Die **Lösung** dieser Aufgabe durch die Erfindung ist dadurch gekennzeichnet, dass der Lagerring aus einem Grundkörper besteht, auf dem ein die Laufbahn aufweisender Trägerring angeordnet ist, wobei der Trägerring aus einem ausgehärteten Harz besteht und wobei der Trägerring zum direkten Anlauf der Wälzkörper des Wälzlagers auf der Laufbahn des Trägerrings ausgebildet ist.

Das Harz des Trägerrings weist dabei vorzugsweise einen Füllstoff aus hartem, verschleißfestem Material auf. Hierbei ist insbesondere daran gedacht, dass der Füllstoff durch metallische Partikel gebildet wird, wobei die metallischen Partikeln insbesondere aus Stahl, aus Leichtmetall, insbesondere aus Aluminium, oder aus Ferrosilizium bestehen. Der Füllstoff kann auch aus Diamant, Silizium-Karbid (SiC), Korund, Bornitrid (CBN) oder Keramik bestehen bzw. diese Materialien aufweisen. Der Füllstoff kann auch durch Hartstofffasern gebildet werden, insbesondere durch Kohlenstofffasern oder durch Glasfasern.

Die Trägerschicht besteht bevorzugt aus Epoxidharz.

Der Grundkörper besteht bevorzugt aus Metall, insbesondere aus Stahl, aus Stahlblech, aus Baustahl oder aus Leichtmetall, insbesondere aus Aluminium oder aus Magnesium.

Eine bevorzugte Ausgestaltung sieht vor, dass der Grundkörper durch ein Gehäuseteil gebildet wird.

Der Grundkörper kann auch aus einem Verbundmaterial bestehen, das zumindest zwei der Materialien aufweist aus der Gruppe Kunststoff, insbesondere Thermoplast, Phenolharz, Kohlenstofffasern, Glasfasern und Metallpartikel, insbesondere Stahlpartikel.

Der Trägerring kann zumindest im Bereich der Laufbahn einer mechanischen Bearbeitung unterzogen sein, insbesondere einer Dreh- und/oder einer Schleifbearbeitung.

Demgemäß ist erfindungsgemäß vorgesehen, dass eine die Laufbahn aufweisende ringförmige Struktur aus einem ausgehärteten Klebstoff besteht. Diese ringförmige Struktur kann gegebenenfalls durch mechanische Bearbeitung geformt sein, insbesondere was die Form der Laufbahn anbelangt. Das Grundkonzept der Erfindung basiert also auf einem Leichtbaulager mit einer durch Klebstoff gebildeten Laufbahn. Der Klebstoff hat bevorzugt einen verschleißfesten Füller.

Der Grundkörper kann - wie erwähnt - aus Metall bestehen. Dabei ist insbesondere an Aluminium, Magnesium oder Baustahl, insbesondere an St 37, gedacht. Es ist also möglich, preiswerte Materialien hier einzusetzen, die dann in der oben erwähnten Weise mit einer Trägerschicht versehen werden. Demgemäß ist die Verschleißfestigkeit des Materials des Grundkörpers selber nicht von ausschlaggebender Bedeutung.

Gemäß der Erfindung wird ein Lagerring für eine Wälz- oder Gleitlagerung bereitgestellt, die besonders für geringe Belastungen geeignet ist und die sich durch ein geringes Gewicht auszeichnet.

Die genannte Materialauswahl erlaubt es, in den verschiedensten Anwendungen bei hohen Anforderungen an Umweltbedingungen eine preiswerte und verschleißstabile Lagerung zur Verfügung zu stellen.

In vorteilhafter Weise weisen die vorgeschlagenen Lagerringe ein geringeres Gewicht auf. Daraus resultierend sind hohe Beschleunigungen möglich. Auch führt das geringere Gewicht zu einem reduzierten Energieverbrauch was die Ressource Umwelt schont.

Die Erfindung stellt einen zweischichtigen Verbund für einen Lagerring zur Verfügung, der speziell für geringe Belastungen sowie geringes Gewicht geeignet ist. Die verfügbare Technologie erlaubt es, gut haftende Klebstoffe herzustellen, die entsprechend modifiziert (nämlich mit Füllstoffen versetzt) auch für Wälzlager einsetzbar sind.

Die genannten umfangreichen Kombinationsmöglichkeiten der Materialien ermöglichen es, in verschiedensten Applikationen hohen Anforderungen bedingt durch schnelle Marktveränderungen ökonomisch schneller zu folgen bzw. mit den genannten Ausgestaltungen neue und bislang nicht mögliche Lösungen zur Verfügung zu stellen.

Durch den beschriebenen modularen Aufbau ist eine Integration der Lagerfunktion in Anbauteile (wie z. B. in das Gehäuse) möglich. Genauso können Umbauteile ins Lager integriert werden.

In vorteilhafter Weise ist keine Wärmebehandlung des Lagerrings erforderlich, da die Verschleißfestigkeit durch die gesondert aufgebrachte Klebstoffschicht erzielt wird. Dies wirkt sich zum einen fertigungsseitig aus: Ressourcen werden geschont, weil auf einen energieintensiven Härtevorgang verzichtet werden kann. Weiterhin wird Verzug infolge Gefügeveränderungen während der Wärmebehandlung vermieden, der gerade bei filigranen Geometrien (wie z. B. bei dünnen Ringen aus Stahl oder Blech) auftritt.

Traditionelle Beschichtungsverfahren (z. B. elektrolytisch, Nitrierhärtung) haben genauso wie eine Wärmebehandlung einen thermischen Einfluss auf die Trägersubstanz. Dies kann zu Spannungen im Lager und letztlich in der Laufbahn führen. Die in der Erfindung beschriebene Klebbeschichtung liefert dagegen spannungsfreie Laufbahnen, da es zu keiner thermischen Einflussnahme kommt.

Mittels der sich optional an den Klebstoffauftrag anschließenden spanenden Bearbeitung kann eine sehr genaue Form der Laufbahn erzeugen werden. Es kann also bei Bedarf auch eine Lagervariante für erhöhte Genauigkeiten konzipiert werden.

Eine derartige Klebschicht, weist auch einen Korrosionsschutz für die darunter befindliche Trägersubstanz auf. Realisiert man darüber hinaus einen Lagerring aus einem nichtmetallischen Trägermaterial, erhält man so einen komplett rostfreien Lagerring.

Auch hat eine Laufbahn aus Klebstoff günstigere Dämpfungseigenschaften als eine Laufbahn aus Standardwälzlagerstahl.

Zudem kann die Klebschicht als elektrischer Isolationsschutz sowie als Wärmedämmschicht dienen.

Durch diese Hybrid-Drehverbindung können grundsätzlich niedrigere Kosten (günstigere Materialkosten, niedrigere Fertigungskosten) realisiert werden (d. h. es ist ein Preisvorteil gegenüber den konventionellen Lösungen möglich).

In der Zeichnung sind Ausführungsbeispiele der Erfindung dargestellt. Es zeigen:
- Fig. 1: den Radialschnitt durch einen Innenring eines Wälzlagers,
- Fig. 2: den Radialschnitt durch einen Außenring eines Wälzlagers und
- Fig. 3: den Radialschnitt durch einen Innenring eines Wälzlagers gemäß einer alternativen Ausführungsform der Erfindung.

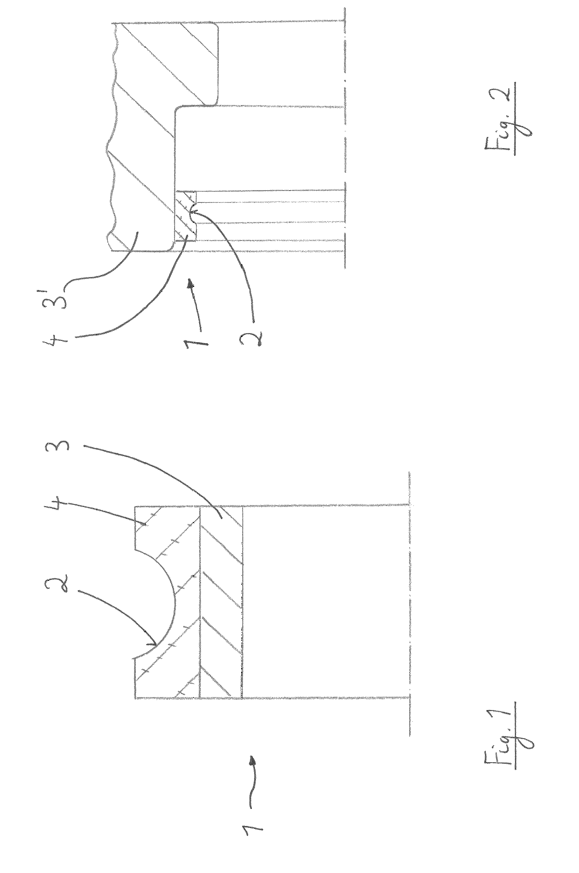

In Fig. 1 ist ein Lagerring 1 eines Kugellagers zu sehen. Er hat eine Laufbahn 2, die der Form des abrollenden Wälzkörpers, hier also der Kugel, angepasst ist. Der Lagerring 1 besteht aus einem Grundkörper 3. Der Grundkörper ist grundsätzlich aus einem preiswerten Material gefertigt, beispielsweise aus Baustahl, wobei insbesondere an den Typ St 37 gedacht ist.

Allerdings kann der Grundkörper 3 auch aus anderen Materialien bestehen, die sich beispielsweise durch ein geringes Gewicht auszeichnen. So kann der Grundkörper auch aus Kunststoff bestehen, z. B. aus einem Thermoplast in den Verstärkungsfasern (Kohlenstofffasern oder Glasfasern) eingelagert sind.

Auf den vorgefertigten Grundkörper 3 wird ein Trägerring 4 aufgebracht, der die Laufbahn 2 aufweist.

Wesentlich ist, dass der Trägerring 4 aus einem ausgehärteten Klebstoff besteht. Es ist ersichtlich, dass daher die aufnehmbaren Lagerkräfte begrenzt sein müssen. Ist dies allerdings der Fall, steht eine sehr leichte und preiswerte Lagerung zur Verfügung.

Die Formung der Laufbahn 2 kann durch einen mechanischen Fertigungsvorgang (Drehen und/oder Schleifen) des ausgehärteten und somit dann formstabilen Klebstoffs erfolgen, so dass insofern eine hohe Präzision erreichbar ist. Die Laufbahn 2 wird also direkt in das Material des Trägerrings 4 aus Klebstoff eingebracht, insbesondere mechanisch eingearbeitet.

Bei der Trägerschicht 4 handelt es sich beispielsweise und bevorzugt um eine solche, die aus einem Epoxidharz bzw. Epoxidklebstoff besteht, das bzw. der mit metallischen Partikeln in Form von Stahl, Aluminium oder Ferrosilizium versetzt ist. Derartige Gemische sind als Epoxy-Flüssigmetalle bekannt und werden beispielsweise unter der Marke Loctite Hysol vertrieben. In diesem Falle wird das Material der Trägerschicht 4 mechanisch auf den Grundkörper 3 aufgetragen. Nach der Aushärtung des Materials der Trägerschicht 4 ist es dann möglich, diese mechanisch (spanend) zu bearbeiten, um die Laufbahn 2 zu erzeugen.

In Fig. 2 ist eine alternative Lösung zu sehen, bei der der Grundkörper 3' des Lagerrings 1 durch ein Gehäuse gebildet wird. Vorliegend ist also auf eine innenzylindrische Fläche des Gehäuses 3' der Klebstoff aufgebracht, durch den der Trägerring 4 gebildet wird.

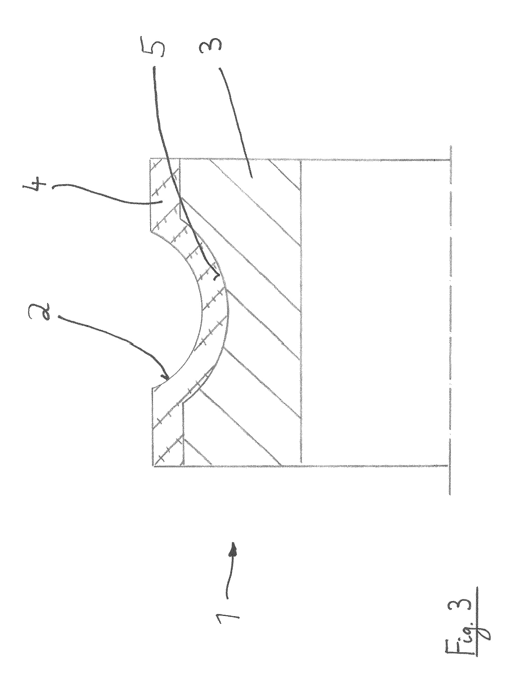

In Fig. 3 ist eine weitere Alternative skizziert. Hier weist der Lagerring 1 einen Grundkörper 3 auf, der bereits eine der Form der Laufbahn entsprechende Ausformung 5 hat. Der Trägerring 4 besteht hier aus einer im Wesentlichen äquidistant dicken Schicht, die auf den Grundkörper 3 aufgebracht ist. Dabei formt der Trägerring 4 die Laufbahn 2 des Lagerrings 1 aus.

Der als Klebstoffschicht fungierende Trägering 4 bildet hier wie in allen anderen Ausführungsbeispielen eine harte, verschleißfeste Schicht. Hierdurch kann der Grundkörper 3 aus Kunststoff oder einem Leichtmetall bestehen; dennoch werden ausreichende Festigkeitswerte für den Wälzlagereinsatz erreicht. Der bevorzugte Anwendungsfall sind Leichtbaulager für geringere Belastungen.

Als Klebstoff wird beispielsweise ein chemisch härtender Klebstoff eingesetzt. Bei diesem Klebstoff (auch als Reaktionsklebstoff bezeichnet) werden die einzelnen chemischen Bausteine für den Klebstoff im entsprechenden Verhältnis zum Klebstoff gemischt; der Trägerring 4 wird dann aus diesem Material gebildet, z. B. durch Aufsprühen oder durch Aufpinseln. Die Verfestigung erfolgt dann durch eine chemische Reaktion der Komponenten.

Bevorzugte Reaktionsklebstoffe sind als zwei- bzw. mehrkomponentige Klebstoffe ausgeführt. In den einzelnen Komponenten befindet sich die Monomere, d. h. die Grundbausteine des bei der Reaktion entstehenden Polymers. Eine der beiden Komponenten kann Harzmonomere (oder auch Binder) enthalten, während die andere Komponente Härter enthält. Als weitere Inhaltsstoffe der Zubereitungen können Stabilisatoren, Thixotropiermittel, Beschleuniger und weitere Additive zum Einsatz kommen.

Für besondere Anwendungsfälle werden auch Drei- oder Mehrkomponentenklebstoffe eingesetzt, die grundsätzlich bei der vorliegenden Erfindung auch eingesetzt werden können.

Vorteilhaft kann es auch sein, wenn die Aushärtung des Klebstoffs unter Ausschluss von Sauerstoff (also anaerob) erfolgt. Dabei härtet der Klebstoff nach einem Radikalketten-Mechanismus unter Ausschluss von Sauerstoff in Anwesenheit von Metallionen aus.

Es können generell auch Schmelzklebstoffe zum Einsatz kommen (auch als "Hotmelts" bezeichnet). Diese sind bei Raumtemperatur fest. Sie werden durch Aufschmelzen verarbeitbar, d. h. sie entfalten bei Erwärmung ihre adhäsive Wirkung. Die heiße Klebstoffschmelze wird auf den Grundkörper 3 aufgetragen. Unmittelbar nach dem Abkühlen und Erstarren des Klebstoffs ist der Klebstoff fest und nicht mehr adhäsiv.

Weitere bevorzugte Klebstoffe, die vorteilhaft bei der vorliegenden Erfindung eingesetzt werden können, sind strahlenhärtende Klebstoffe. Bei diesen Klebstoffen, die als einkomponentige Systeme eingesetzt werden, härten durch radikalische Polymerisation zu festen Polymeren, wobei die Bildung der Startradikale durch Bestrahlung mit UV-Licht (oder anderen Strahlenquellen, wie z. B. Elektronen) hervorgerufen wird. Die Wellenlänge des UV-Lichts muss dabei genau auf das eingesetzte Klebstoffsystem abgestimmt sein. Die Aushärtung erfolgt durch Bestrahlen mit UV-Licht. Es sind hierbei mehrere Varianten möglich: Zunächst sind UV-Acrylate bekannt. Im flüssigen Zustand besteht ein radikalisch vernetzender UV-Klebstoff überwiegend aus Monomeren und Photoinitiatoren. In diesem Zustand lässt sich der Klebstoff leicht dosieren. Durch die Einwirkung von UV-Strahlung werden die Photoinitiatoren in freie Radikale gespalten. Diese Radikale leiten die Bildung von Polymerketten ein. Im ausgehärteten Zustand besteht der UV-Klebstoff aus vernetzten Polymerketten. Weiterhin können kationische Epoxies (Epoxidharze-Klebstoffe) zum Kleben von nicht transparenten Substraten eingesetzt werden. Im Unterschied zu den radikalisch härtenden Acrylatklebstoffen können die kationisch härtenden Klebstoffsysteme nach einer ausreichenden Aktivierung mit UV-Strahlung im Dunklen weiterhärten. Kationische Epoxies können für Anwendungen mit einem UV-durchlässigen Bauteil ebenso eingesetzt werden, wie für Anwendungen bei nicht UV-durchlässigen Werkstoffen. Bei Letzteren muss der Klebstoff nach dem Dosieren, jedoch vor dem Fügen mit UV-Strahlung aktiviert werden.

Für die vorgeschlagene Konzeption kann ein Klebstoff auf Basis von Polyurethanen, Epoxidharzen oder Acrylaten verwendet werden. Dabei schließt der Begriff "Acrylat" substituierte Acrylate wie Methacrylat ein.

Beispiele von Klebstoffen, die sich auch bewährt haben, sind so genannte "reaktive Schmelzklebstoffe". Diese sind in geschmolzenen Zustand streichfähig, so dass sie in diesem Zustand auf den Grundkörper 3 aufgebracht werden können, ohne dass der Aushärtungs-Mechanismus aktiviert wird. Dieser erfordert vielmehr ein Erwärmen auf eine höher liegende Aktivierungstemperatur, bei der ein latenter Härter für eine rektionsfähige Bindemittel-Komponente (beispielsweise ein Präpolymer mit Epoxid- oder Isocyanat-Gruppen) aktiviert wird.

Es wird hierzu exemplarisch auf die EP 0 354 498 A2 hingewiesen, wo hierzu nähere Angaben zu finden sind.

Der Klebstoff enthält eine Harzkomponente, mindestens einen thermisch aktivierbaren latenten Härter für die Harzkomponente sowie ggf. Beschleuniger, Füllstoffe, Thixotropiehilfsmittel und weitere übliche Zusatzstoffe, wobei die Harzkomponente durch Umsetzung von einem beim Raumtemperatur festen Epoxidharz, einem bei Raumtemperatur flüssigen Epoxidharz und einem linearen Polyoxypropylen mit Amino-Endgruppen erhältlich ist. Die Epoxidharze werden in einer solchen Menge, bezogen auf das Polyoxypropylen mit Amino-Endgruppen, eingesetzt, dass ein Überschuss an Epoxidgruppen, bezogen auf die Aminogruppen, gewährleistet ist. Als latenter Härter ist beispielsweise Dicyandiamid geeignet.

Speziellere Ausführungsformen für einen brauchbaren Klebstoff, mit dem sich die Umsetzung der vorliegenden Erfindung ermöglicht, sind auch in der WO 93/00381 offenbart.

Weiterhin können Epoxidharz-Strukturklebstoffe eingesetzt werden, wie sie beispielsweise in der WO 00/37554 näher beschrieben sind.

Hierbei handelt es sich um Zusammensetzungen, die ein Copolymeres mit mindestens einer Glasübergangstemperatur von -30 °C oder niedriger und gegenüber Epoxiden reaktiven Gruppen oder ein Reaktionsprodukt dieses Copolymeren mit einem Polyepoxid, weiterhin ein Reaktionsprodukt aus einem Polyurethan-Prepolymer und einem Polyphenol oder Aminophenol sowie schließlich mindestens ein Epoxidharz enthalten. Um diese Zusammensetzungen wärmehärtbar zu machen, enthalten sie zusätzlich einen latenten Härter aus der Gruppe Dicyandiamid, Guanamine, Guanidine, Aminoguanidine, feste aromatische Diamine und/oder Härtungsbeschleuniger. Zusätzlich können sie Weichmacher, Reaktivverdünner, Rheologie- Hilfsmittel, Füllstoffe, Netzmittel und/oder Alterungsschutzmittel und/oder Stabilisatoren enthalten.

### Bezugszeichenliste

- 1: Lagerring
- 2: Laufbahn
- 3: Grundkörper
- 3': Grundkörper (Gehäuse)
- 4: Trägerring
- 5: Ausformung

## Patentansprüche

1. Lagerring (1) eines Wälzlagers, der eine ringförmige Struktur mit einer Laufbahn (2) aufweist, **dadurch gekennzeichnet, dass** der Lagerring (1) aus einem Grundkörper (3, 3') besteht, auf dem ein die Laufbahn (2) aufweisender Trägerring (4) angeordnet ist, wobei der Trägerring (4) aus einem ausgehärteten Harz besteht und wobei der Trägerring (4) zum direkten Anlauf der Wälzkörper des Wälzlagers auf der Laufbahn (2) des Trägerrings (4) ausgebildet ist.

2. Lagerring nach Anspruch 1, **dadurch gekennzeichnet, dass** das Harz des Trägerrings (4) einen Füllstoff aus hartem, verschleißfestem Material aufweist.

3. Lagerring nach Anspruch 2, **dadurch gekennzeichnet, dass** der Füllstoff durch metallische Partikel gebildet wird, wobei die metallischen Partikeln insbesondere aus Stahl, aus Leichtmetall, insbesondere aus Aluminium, oder aus Ferrosilizium bestehen.

4. Lagerring nach Anspruch 2, **dadurch gekennzeichnet, dass** der Füllstoff Diamant, Silizium-Karbid (SiC), Korund, Bornitrid (CBN) oder Keramik ist oder dieses Material aufweist.

5. Lagerring nach Anspruch 2, **dadurch gekennzeichnet, dass** der Füllstoff durch Hartstofffasern gebildet wird, insbesondere durch Kohlenstofffasern oder durch Glasfasern.

6. Lagerring nach einem der Ansprüche 1 bis 5, **dadurch gekennzeichnet, dass** das Harz Epoxidharz ist.

7. Lagerring nach einem der Ansprüche 1 bis 6, **dadurch gekennzeichnet, dass** der Grundkörper (3, 3') aus Metall, insbesondere aus Stahl, aus Stahlblech, aus Baustahl oder aus Leichtmetall, insbesondere aus Aluminium oder aus Magnesium, besteht.

8. Lagerring nach einem der Ansprüche 1 bis 7, **dadurch gekennzeichnet, dass** der Grundkörper durch ein Gehäuseteil (3') gebildet wird.

9. Lagerring nach einem der Ansprüche 1 bis 6, **dadurch gekennzeichnet, dass** der Grundkörper (3) aus einem Verbundmaterial besteht, das zumindest zwei der Materialien aufweist aus der Gruppe Kunststoff, insbesondere Thermoplast, Phenolharz, Kohlenstofffasern, Glasfasern und Metallpartikel, insbesondere Stahlpartikel.

10. Lagerring nach einem der Ansprüche 1 bis 9, **dadurch gekennzeichnet, dass** der Trägerring (4) zumindest im Bereich der Laufbahn (2) einer mechanischen Bearbeitung unterzogen ist, insbesondere einer Dreh- und/oder einer Schleifbearbeitung.
